# EUROPEAN PATENT SPECIFICATION

(11) **EP 0 643 618 B1**
(45) Date of publication and mention of the grant of the patent: **31.03.1999**
(21) Application number: 93901192.0
(22) Date of filing: 16.12.1992
(51) Int. Cl.: B01J 8/06, C01B 3/38

(54) **ENDOTHERMIC REACTION APPARATUS**
ENDOTHERMISCHER REAKTOR
APPAREIL DE REACTION ENDOTHERMIQUE

(30) Priority: 19.12.1991 US 810251; 26.05.1992 US 889035
(43) Date of publication of application: 22.03.1995
(73) Proprietor: THE STANDARD OIL COMPANY, Cleveland Ohio 44114 (US)
(72) Inventor: RUHL, Robert, C., Cleveland Heights, OH 44106 (US); HARDMAN, Stephen, Letchworth, Herts SG6 2DN (GB); KENYON, Michael, R. Chota Ghar, West Ewell, Surrey KT 100 HS (GB); McFARLANE, Roderick, A., Cheam, Surrey 5M2 7DZ (GB)
(74) Representative: Wilson, Michael John
(86) International application number: US9210942
(87) International publication number: WO9312032

(56) References cited:
- DE-A- 3 245 636
- FR-A- 1 127 697
- US-A- 1 934 836
- US-A- 2 039 603
- US-A- 2 336 879
- US-A- 2 569 846
- US-A- 3 909 299
- US-A- 4 224 298
- US-A- 4 861 348
- US-A- 4 909 808
- PATENT ABSTRACTS OF JAPAN vol. 7, no. 164 (C-164) 28 April 1983 & JP-A-58 026 002 (TOKYO SHIBAURA DENKI K.K.) 16 February 1983

## Description

The present invention relates to endothermic reaction apparatus and use of the apparatus in carrying out an endothermic reaction.

US-A-1,934,836 discloses that in the process for the production of gases containing hydrogen by the catalytic conversion of hydrocarbons by steam at elevated temperatures the catalysts may be arranged in externally heated long chambers, the walls of which consist of a material of high heat conductivity which is resistant to high temperatures. A reaction vessel similar to a tube boiler may be employed and the contact substances may be arranged either within the tubes, in which case a heating medium, for example hot combustion gases, is conducted through the space surrounding the tubes, or vice versa. When using unactivated catalysts, and in the case of very impure initial gases or vapours, it is beneficial to work with the hydrocarbons and the heating medium in a counter current. When employing activated catalysts it is best to pass the gases in the same direction as the heating medium.

US-A-4,224,298 discloses apparatus for the reforming of hydrocarbons comprising a fluidised bed furnace housed in a pressure vessel able to withstand an internal pressure in excess of 2.54 MPa (50 atmospheres) absolute, and substantially vertical reformer tubes extending through, or located in, the zone occupied by the fluidised bed in operation of the furnace.

Our earlier published European Patent Application 0 450 872 A1, corresponding to application USSN 07/504,375, filed April 3, 1990, describes an endothermic reaction apparatus or furnace for carrying out various types of endothermic reactions such as steam methane reforming, pyrolysis of ethane to ethylene and the like. In order to drive the endothermic reaction, a heat source comprising a ceramic combustion tube and a fuel feed pipe inside the combustion tube is positioned inside the furnace. Fuel and air, which are separately supplied to the fuel feed pipe and combustion tube, respectively, mix, ignite and burn inside the combustion tube to thereby generate heat. Endothermic reactants are fed to the interior of the furnace outside of the combustion tube where they react due to the heat produced inside the tube.
In a preferred embodiment, the endothermic reactant and product gases (hereinafter "reaction gases"), on the one hand, and the combustion fuel, air and combustion product gases (hereinafter "combustion gases"), on the other hand, flow countercurrently through the furnace. By this means, the separately-fed combustion fuel and air can be heated to above their autoignition temperature before being combined, which in turn allows the design of the furnace to be significantly simplified.

This design has many advantages. Ceramic tubes can withstand the very high temperatures encountered in many endothermic reactions better than most metals. Ceramic tubes can also be made stronger and hence thinner by an externally applied compressive stress, either by mechanical means such as clamping the opposite ends of the tubes, or by increasing the pressure on the outside surfaces of the tubes where the endothermic reaction takes place or both.

Unfortunately, ceramic tubes exhibit too much thermal stress in many applications, particularly if they are too thick. Ceramic tubes which are both long and thin, which is desirable for high volume applications where large numbers of closely packed tubes are necessary, are also difficult to fabricate. Ceramics are also generally brittle, leading to potential reliability problems.

Accordingly, it is the object of the present invention to provide an improved endothermic reaction apparatus or furnace which employs metallic instead of ceramic tubes but which still can be used at very high endothermic reaction temperatures, especially in high volume applications where large numbers of closely-packed tubes are necessary.

This and other objects are accomplished by the present invention in accordance with which an endothermic reaction furnace is designed to have the endothermic reaction carried out inside a plurality of metallic reaction tubes provided with associated heat generating means for generating heat by the combustion of fuel and air. The flow paths of the reaction gases, on the one hand, and the combustion gases, on the other hand, are arranged so that air and combustion fuel are separately heated to above their combustion temperature before being combined and also so that all product gases are significantly cooled before exiting the furnace.

With this arrangement, the inside and outside wall temperatures of the reaction tubes are maintained at acceptably low levels even though the flame temperature of the combustion gases reaches a very high level. This enables metallic rather than ceramic tubes to be used. Also, autoignition of the combustion gases eliminates the need for separate ignition devices and/or flame holders to initiate and/or stabilise combustion. These features are particularly valuable in large-scale, multi-tube reforming furnaces, since they allow close packing of the combustion tubes and also eliminate costly downtime and repair efforts needed to service inoperative ignition devices.

The invention will now be further described by reference to the accompanying Drawings in which:-
Figure 1 is a cross-sectional representation of a reforming apparatus which illustrates aspects of the present invention.
Figure 2 is a graphic representation of the temperature profiles of reaction and combustion gases as well as the reaction tube wall of the apparatus of Figure 1 when in steady-state operation.

For the purpose of simplification an apparatus containing only one endothermic reaction tube will be described, though it will be understood that the apparatus according to the present invention contains a plurality of such tubes.

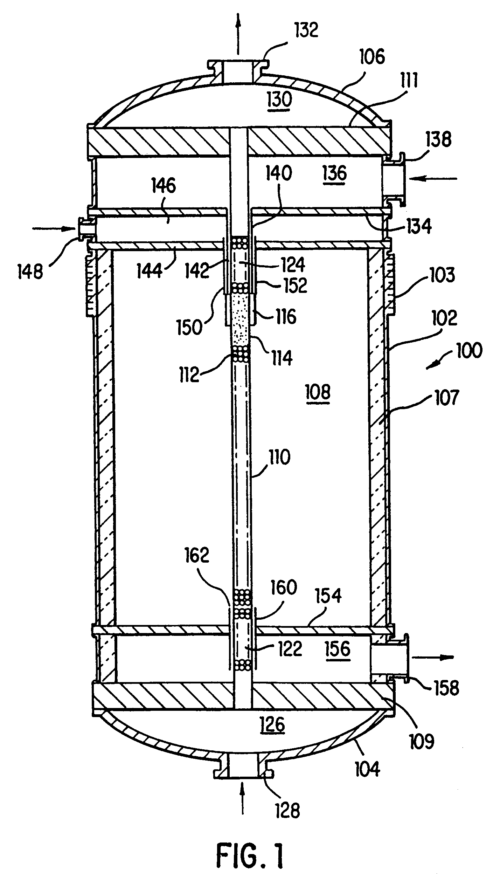

As shown in Figure 1, the inventive reaction apparatus generally indicated at 100 comprises an elongated vessel 102 with expansion joint 103 and defining a first end or "head" 104 and second end or head 106, insulation 107 and an interior 108. For cold starts, an external burner (not shown) is employed to preheat the incoming air to a temperature of the order of 550°C in order to preheat the reactor to above autoignition temperatures. This burner is shut off following the fuel ignition.

Within interior 108 is an endothermic reaction tube 110 which is secured to end plates or "tube sheets" 109 and 111 by suitable seals such as, for example, welding (not shown). As can be seen from Figure 1, tube sheets 109 and 111 are rigidly secured to the walls of vessel 102 so that the tube sheets are not axially moveable in said vessel relative to the portion of the vessel to which they are attached, this being known in the art as a "fixed tube sheet design." Furthermore, in the specific embodiment described there is no support structure, such as rods or baffles, on the shell side of the vessel interior to support reaction tube 110 at an intermediate position (i.e. at a position intermediate its two ends) as is used in conventional designs to prevent lateral movement of the tube and hence buckling under various compressive loads.

The inside of reaction tube 110 defines an endothermic reaction flow path for carrying out the endothermic reaction, while the volume outside of reaction tube 110 defines a combustion flow path for carrying out combustion. Reaction tube 110 is filled with an endothermic reaction catalyst 112 of a suitable shape and size. In the embodiment shown, catalyst 112 is composed of spheres approximately 5 mm in diameter. In order to foster heat transfer and thereby reduce thermal degradation of reaction tube 110, endothermic catalyst 114 contiguous to combustion zone 116 is smaller in size, for example 3 mm in diameter. Inert material 122 and 124 is provided on either side of endothermic catalyst 112/114, also to improve heat transfer.

Head 104 and tube sheet 109 together define an inlet manifold 126 for receiving endothermic reactant feed from inlet 128. Head 106 and tube sheet 111 together define an outlet manifold 130 for discharging endothermic product through outlet 132.

Air header 134 together with tube sheet 111 define air manifold 136 for receiving air from inlet 138. Air tube 140, which is concentric with reaction tube 110, communicates with air manifold 136 for charging air into combustion zone 116 via annulus 142. Fuel header 144 together with air header 134 define fuel manifold 146 for receiving gaseous fuel from fuel inlet 148. Fuel tube 150, which is also concentric with reaction tube 110 and air tube 140 communicates with fuel manifold 146 for supplying fuel to combustion zone 116 via fuel annulus 152. Combustion gas header 154 together with tube sheet 109 define combustion gas manifold 156 for discharging combustion gas produced by the combustion of fuel and air in vessel interior 108 through combustion gas annulus 162, which is formed by reaction tube 110 and discharge pipe 160 concentric therewith, and combustion gas outlet 158. As shown in Figure 1, air tube 140 and fuel tube 150 are so configured that combustion zone 116 is located in the interior of vessel 102 and, as further described below, spaced far enough away from the reaction and combustion gas outlets so that both the endothermic product gases and the combustion product gases will be considerably cooled before exiting the vessel.

In operation, once steady-state has been reached, endothermic reactant, such as a mixture of methane and water vapor, is charged into inlet 128, endothermic product is withdrawn from outlet 132, fuel and air are charged into fuel inlet 148 and air inlet 138, respectively, and combustion gases are withdrawn from combustion outlet 158. This sets up a countercurrent flow between the reaction gases flowing through combustion tube 110 and the combustion gases flowing through interior 108 of vessel 102. The flow rates of the various reactants and products and the size and shape of the various tubes are so selected that when air and fuel are mixed in combustion zone 116 they will be at or above their autoignition temperature. By this means, they will mix, ignite and combust without the need for a separate igniter such as a glowplug, sparkplug or the like. Countercurrent flow of the endothermic reactant gases and combustion gases also tends to improve heat transfer between the reactant gases and combustion gases on opposite sides of the reaction tube walls. This in turn minimizes hot spots and leads to a longer useful life of the tubes.

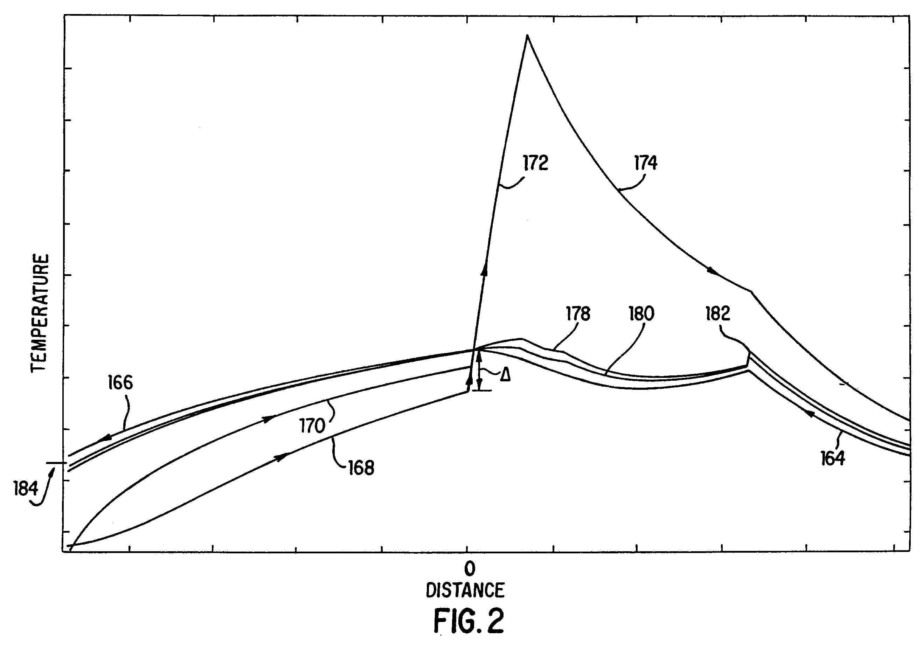

This beneficial effect is illustrated in Figure 2 which is a graphic representation of the temperature of various process gases as well as the tube wall surfaces of reaction tube 110 of the apparatus of Figure 1. In Figure 2, the abscissa is a measure of the distance from combustion zone 116, with zero being taken as the start of combustion zone 116. The ordinate is a measure of the temperature of the various gases and tube wall being measured. In this figure, 164 indicates the endothermic reactant temperature profile, 166 indicates the endothermic product temperature profile, 168 the fuel temperature profile, 170 the air temperature profile, 172 the flame temperature profile, 174 the combustion gas temperature profile, 178 the reaction tube outside wall temperature profile and 180 the reaction tube inside wall temperature profile. 182 indicates the boundary between inert 122 and endothermic catalyst 112, while 184 indicates the autoignition temperature of the fuel/air combination.

As can be seen from the Figure, even though the flame temperature of the combusting gases reaches a very high level, the inner and outer tube walls of reaction tube 110 stay relatively low, thereby remarkably prolonging the useful life of these tubes and enabling metallic rather than ceramic tubes to be used in high temperature applications. At the same time, the various gases exiting the device, both the endothermic product gases and the combustion gases, are cooled to reasonable temperature while inside the inventive furnace, the combustion gases are heated to above their autoignition temperatures and at the same time sufficient heat is provided to the endothermic reactants to drive the desired endothermic reaction. Also, the problem of high thermal stress, which can sometimes be experienced with ceramic tubes, has been avoided.

The inventive reaction apparatus is ideally suited for large-scale operations such as the commercial production of synthesis gas by the steam reforming of gaseous hydrocarbons, especially methane. Steam reforming reactions are favoured by higher temperatures, such as for example 800 to 1000°C, more preferably 870 to 920°C, while most downstream uses of syngas, for example methanol synthesis and Fischer-Tropsch synthesis, are favoured at high pressures, such as for example at least 0.508 MPa (10 atm), preferably 1.016 to 3.048 MPa (20 to 60 atm) more preferably 1.524 to 2.540 MPa (30 to 50 atm). Therefore it is desirable to operate at these high pressures, at least on the shell side, and high temperatures when carrying out this type of reaction.

Large-diameter reaction tubes intended for large-scale furnaces to be operated at these high temperatures and pressures, whether such tubes are made from ceramic or the expensive metal alloys needed to withstand such high temperatures, require very thick walls and exhibit poor temperature profiles internally. They are also very expensive. Therefore large-scale furnaces intended to carry out steam reforming at these high temperatures and pressures must be made from a large number of long, small diameter closely-packed tubes to be economic. Close packing of a large number of small diameter tubes is made possible by the present invention in this embodiment because the tubes are metal, the reaction occurs inside the tubes and the autoignition of combustion gases eliminates the need for igniters and/or flame holders to assure stable combustion flames. The absence of a tube support structure inside the vessel on the shell side, which is a preferred but not mandatory feature of the invention, also helps.

In this connection, it is important to note that when the apparatus of this invention is operated with a pressure higher than atmospheric on the tube side, such as in an integrated process involving methane reformation as a first step followed by further downstream high pressure processing, the tubes will be kept in tension. This is because the pressure on the tube side creates an axial force tending to push heads 104 and 106, and hence inlet and outlet manifolds 126 and 130, apart and further because expansion joint 103 prevents the walls of vessel 102 from providing any countervailing tensile force. Tension on the tubes is an important feature of this embodiment of the invention because the tubes, especially when long, thin tubes are used as is necessary for economic operation, have comparatively little strength in compression and therefore any significant compressive load, axial or lateral, would render the tubes unserviceable through buckling and distortion. Tension on the tubes, however, gives the tubes added strength to avoid the buckling problem, and thereby allows the tubes to be made thinner and hence cheaper.

Moreover, at the high temperatures encountered in most endothermic reactions, the tubes will inherently undergo creep, i.e. high temperature deformation, primarily in the axial direction. For example, it is estimated that tubes approximately 7.62m (25 feet) in length will undergo an elongation of approximately 0.076m (3 inches) in a typical methane reforming environment. Axial creep deformation of the tubes allows the tubes to automatically distribute the axial load evenly among all the tubes, which is quite different from conventional fixed tube sheet shell and tube heat exchangers in which tubesheet bowing causes the axial loads in the tubes to vary considerably across the tubesheet. This automatic distribution of the axial load evenly across the tubes contributes to the longer useful life of the apparatus as a whole, since it avoids early failure of tubes subjected to disproportionately higher axial loads as would occur in prior art designs.

Thus, in a preferred embodiment, the present invention provides combustion furnaces having at least 100, preferably at least 500, more preferably at least 1,000 or even 5,000 combustion tubes, each having an inside diameter to length ratio of 50 to 1000, preferably 150 to 500, more preferably 250 to 350.

In particular, the present invention is ideally suited for the design of large volume, high capacity furnaces having at least 100 combustion tubes, each with a length to internal diameter ratio of at least 100. Such furnaces are suitable for high temperature (at least 850°C) and high pressure (at least 10 atm) operation. More preferred are furnaces having at least 500 combustion tubes each with a length to internal diameter ratio of at least 200. Even more preferred for high volume operations are furnaces having at least 1,000 tubes, each with a length to internal diameter ratio of at least 250. These latter furnaces are especially useful for high volume operations carried out at elevated pressures, e.g. at least about 3.445 MPa (500 psi) and elevated temperatures, e.g. at least about 875°C.

Determining the best design and operating conditions of the inventive furnace for a particular application depends on many factors as discussed below. For example, steam-methane reforming (and most of the other endothermic reactions of interest here) is favoured by high temperatures and by low pressures. However, most applications for the product syngas require that the syngas be at high pressure. The use of compressors to compress syngas is very expensive in both capital and energy.

This invention makes it practical to produce syngas at any desired pressure up to about 3.048 MPa (60 atm). The preferred pressure would be the lowest needed for the subsequent uses of the product gas which, of course, means that the syngas compressor needed in prior art arrangements can be totally eliminated.

The pressure of the air, combustible fuel and combustion products in the combustion flow path can be ambient as is conventional. Where the endothermic reaction is carried out at elevated pressure, however, it is desirable to maintain the pressure of the combustion gases at a higher pressure, for example 0.254 to 0.508 MPa (2 to 10 atmospheres) or more, since this reduces stresses on the reaction tubes and thus enables the reaction tubes to be thinner.

The preferred inside diameter to length ratio of the reaction tubes depends upon the embodiment selected, the approach temperatures desired, and the allowable gas pressure drops in the particular application. For example, the Figure 1 embodiment will preferably employ an L/D ratio of 250 to 350.

The preferred inside diameter of the reaction tubes is relatively small, for example 5 to 50mm, preferably 15 to 30mm, for economic reasons, although tubes of any inside diameter could be used. A small diameter requires a thinner wall than a larger diameter for the same temperature and differential pressure and is hence less costly. If the tubes are too small however, the tube count will become very large and costs will rise again. Also, very small diameters may cause catalyst packing problems, leading to locally poorer heat transfer. Larger tubes will exhibit unfavourable radial temperature gradients.

The preferred tube separation distance in the case of a multitube design is quite small. Preferably, the centreline spacing between adjacent tube groups (i.e. feed tube 150, air tube 140 and reaction tube 110) is 1.25 times the outside diameter of feed tube 150. Small distances lead to smaller vessel sizes.

Metallic tubes are preferable to ceramic tubes due to their greater availability in long length to diameter ratios, ductility, ease of sealing (by welding), reliability, lower cost, and thermal stress resistance.

In determining the preferred tube count, a choice must be made between a single very large reactor and multiple smaller reactors, especially for industrial processes intended to treat very large volumes of process gas. In general, there are few overall cost advantages in using more than several thousand tubes in a single reactor. The preferred minimum tube count is that needed to process the required throughput of gas. Using the Figure 1 embodiment with a reaction tube inside a diameter of 2.03cm (0.8 inches), the synthesis gas production per tube in one example was about 2.7 kg-moles/hour.

Preferred metal alloys for use in the inventive reaction furnace must have high hot strength (resistance to creep and creep rupture) and high resistance to both oxidation and to process gas corrosion. Among the alloys suitable for typical applications are various nickel-based, high-temperature alloys. For example, if the inventive reaction furnace is intended to be used for steam reforming of methane high temperature nickel-based alloys containing chromium, tungsten and molybdenum, such as Haynes® 230 (22% Cr, 14% in, 2% Mo balance Ni) available from Haynes International, Inc. of Kokomo, Indiana, are preferred. If desired, metal tubes can be provided with suitable coatings to prevent metal dusting and other forms of attack. Such coatings are well-known in the art, alonizing being a specific example.

The preferred peak process temperature depends upon the pressure chosen, the tube material, the feed mixture composition, and the requirements of external processes. It is often desirable to operate at the highest temperature which will give acceptable tube life under the chosen conditions. In these cases, metallic tubes may preferably be operated in the range of about 850° C to 1000°C. In other cases, a superior process heat balance and overall cost savings will be obtained at somewhat lower temperatures than the above, with the preferred peak process temperature for metallic tubes then being about 875 to 925° C.

In a particularly preferred embodiment of the invention, the inventive reaction furnace is designed and operated so that during steady state operation the difference between the temperature to which the fuel and air are heated prior to mixing in the combustion zone and the maximum endothermic reaction temperature, which is indicated by temperature difference Δ in Figure 2, is less than 200° C. Preferably this difference is 50 to 100° C. Since most of the common gaseous fuels autoignite with air at temperatures of about 400 to 450° C, and since most endothermic reactions of interest here occur at approximately 850° C to 950° C, this means that in normal operation according to this preferred embodiment the air and gaseous fuel will be heated to significantly (400 to 500° C) above its autoignition temperature before being combined in combustion zone 116. This extensive heating results in extensive cooling of the endothermic product gases.

In the same way, it is desirable to design and operate the furnace so that the combustion product gases are cooled significantly before exiting the furnace. By proper design and operation of the furnace, it is possible to ensure that both the combustion and endothermic product gases exit the furnace at moderate temperatures, for example below 500° C. This provides high thermal efficiency and moderate temperatures of connecting piping and equipment.

The present invention can be used to carry out a wide variety of different endothermic reactions such as steam reforming of light hydrocarbons, especially methane, ethane, and natural gas, the pyrolysis of alkanes such as ethane and propane to their corresponding alkenes, ethylene and propylene, and so forth. Such processes are well known in the art.

Some of these processes can be carried out without a catalyst while others require or usually employ a suitable catalyst. Where a catalyst is used, it should maintain sufficient activity over a long period of time at the high bed temperatures encountered herein. It should be strong enough to support the bed weight above it. It should have a particle size which is small enough to properly fill the spaces between the tubes but large enough to minimise pressure drop through the bed to an acceptable value. It should not sinter-bond excessively to itself or to the tubes upon long exposures at the high temperatures. A suitable form of nickel on alumina is one possible candidate, but other catalysts are also reported to be suitable.

For hydrogen production, either a high-temperature shift catalyst and/or a low-temperature shift catalyst can optionally be placed within the reactor in the zone where the process gas is cooling and this will cause most of the CO to react with excess H₂O to form more H₂ with CO₂ as a byproduct (the so-called "water-gas shift" reaction).

The following hypothetical example is provided to more thoroughly illustrate the present invention:

### Example

A feed of the composition shown below is supplied to the Figure 1 apparatus at 350° C and at the pressure and flowrate shown. The product gas composition was computed based upon chemical equilibrium thermodynamics at approximately 893° C and 3.596 MPa (522 psia). The product exit temperature is 490° C. The air feed rate is 2139 kmol/hr at 120° C and 0.903 MPa (131 psia). The fuel gas contains 82% H₂, balance several other gases.
The fuel and air preheat temperatures are near 850° C and the exhaust temperature is about 495°C.

| Mole % | Feed Gas | Product Gas |
|---|---|---|
| H₂ | 1.19 | 45.28 |
| CO | - | 14.93 |
| CO₂ | 8.18 | 5.66 |
| CH₄ | 30.86 | 6.86 |
| N₂ | 6.29 | 4.35 |
| H₂O | 53.57 | 22.90 |
| Pressure | 4.396 MPa (638 psia) | 508 |
| Flow Rate (kmol/hr) | 3222 | 4583 |

Reformer peak process temperature: 900° C

| | |
|---|---|
| Combustion Tube Count: | 1700 |
| Combustion Tube Inside Diameter: | 19.8 mm |
| Combustion Tube Overall Length: | 7260 mm |
| Combustion Tube Length/Diameter: | 367 |

This shows that high methane conversions to syngas can be achieved at desirable high pressures and also at temperatures low enough to accommodate many commercially available high temperature alloys. This means that the inventive furnace can be made with metal rather than ceramic tubes, and that these metal tubes will give long useful lives even though used to provide high conversion of methane to syngas at high pressures.

Many modifications can be made of the preferred embodiment of the invention as described above. For example, the gaseous fuel and air flow paths could be switched, if desired. Also, these flow paths need not be annuluses concentric with the reaction tubes as shown but may be any arrangement which allows the fuel and air to be separately heated to above the autoignition temperatures before being combined in the combustion zone. In addition, the combustion gases, on the one hand, and the endothermic reaction gases, on the other hand, could be made to flow cocurrently, rather than countercurrently, if desired.

Still other modifications are possible. Gas to liquid condensation might desirably occur in the coolest zone of the reactor. In addition, cold reactor preheat for start-up could be achieved alternatively by other means than an electric resistance heater. For example, hot combustion gases could be introduced through supplementary nozzles in the reactor and circulated through the desired region. Also, many different types of thermal insulation might be used inside the pressure vessel. In addition, the maximum temperature of the combustion gases outside the tubes may be varied by adjusting the fuel composition and the fuel and air flow rates. Increasing the air flow rate progressively above the stoichiometric ratio will progressively lower the maximum local temperatures. Steam additions to the fuel can also reduce maximum temperatures.

Finally, if syngas is desired for ammonia synthesis, an appropriate (usually small) proportion of compressed air may be added to the natural gas and steam, such that the product syngas will contain the desired ratio of H₂ to N₂ (usually 3:1). This air addition will react in the catalyst bed during heatup, but will be low enough so as not to produce an excessive local temperature rise in the bed. The overall reaction will remain endothermic. This method for making ammonia syngas does not require the addition of any oxygen aside from the air itself, which is a desirable cost saving versus some competing processes which require the separation of oxygen from the air.

All such modifications are intended to be included within the scope of the present invention, which is to be limited only by the following claims.

## Claims

1. Apparatus for carrying out an endothermic reaction in which an endothermic reactant gas is heated by the combustion of air and a combustible fuel gas to thereby cause the reactant gas to form an endothermic product, which apparatus comprises:-
(a) a vessel (102),
(b) a plurality of metallic reaction tubes (110) in the vessel dividing the interior of the vessel into a plurality of separate reaction flow paths collectively defining a reaction flow path for carrying out the endothermic reaction and a plurality of separate combustion flow paths outside the reaction tubes collectively defining a combustion flow path, the reaction flow path and the combustion flow path being in thermal communication with one another so that heat in the combustion flow path can be transferred to the reaction flow path,
(c) separate heat generating means (116) associated with each of the metallic reaction tubes (110) for generating heat by the combustion of fuel gas and air,
(d) first supply means (126) for causing the reactant gas to flow into the reaction flow path and first withdrawal means (130) for withdrawing endothermic product gas from the reaction flow path, and
(e) second supply means (136) adapted to separately supply air (140) and fuel gas (150) to each of the heat generating means, the heat generating means being located in the interior of the vessel whereby the air and fuel gas can be heated to above their autoignition temperature prior to reaching the heat generating means and second withdrawal means for withdrawing combustion gas from the combustion flow path.

2. Apparatus according to claim 1 wherein the second supply means defines a fuel gas feed passageway (150) and an air feed passageway (140) for each tube, the associated air feed passageway and fuel gas feed passageway for each tube being concentric.

3. Apparatus according to claim 1 wherein the heat generating means is spaced far enough away from the first and second withdrawal means so that both the endothermic product gas and the combustion gas can be cooled before exiting the vessel.

4. Apparatus according to any one of the proceeding claims wherein the endothermic reaction tubes contain endothermic reaction catalyst.

5. Apparatus according to any one of the preceding claims wherein the apparatus is in the form of a shell and tube heat exchanger having a fixed tube sheet design.

6. Apparatus according to any one of the preceding claims wherein the reaction tubes are unsupported intermediate their respective ends.

7. Apparatus according to any one of the preceding claims wherein the reaction tubes are essentially straight and essentially parallel.

8. A process for carrying out an endothermic reaction in an endothermic reaction apparatus in which an endothermic reactant is heated by the combustion of air and a combustible fuel gas to thereby convert the reactant into an endothermic product, the apparatus comprising:
(a) a vessel (102),
(b) a plurality of metallic reaction tubes (110) in the vessel dividing the interior of the vessel into a plurality of separate reaction flow paths collectively defining a reaction flow path for carrying out the endothermic reaction and a plurality of separate combustion flow paths outside the reaction tubes collectively defining a combustion flow path, the reaction flow path and the combustion flow path being in thermal communication with one another so that heat in the combustion flow path can be transferred to the reaction flow path,
(c) separate heat generating means (116) associated with each of the metallic reaction tubes (110) for generating heat by the combustion of fuel gas and air,
(d) first supply means (126) for causing the reactant gas to flow into the reaction flow paths and first withdrawal means (130) for withdrawing endothermic product from the reaction flow paths, and
(e) second supply means (136) adapted to separately supply air (140) and fuel gas (150) to each of the heat generating means, the heat generating means being located in the interior of the vessel whereby the air and fuel gas can be heated to above their autoignition temperature prior to reaching the heat generating means and second withdrawal means for withdrawing combustion gas from the combustion flow path,
which process comprises
(i) via first supply means causing the reactant to flow along the reactant flow paths,
(ii) via second supply means separately feeding the air and the fuel gas to each of the heat generating means, the fuel gas and air being heated to above their autoignition temperature prior to reaching the heat generating means so that the air and fuel gas autoignite and combust to produce heat in the combustion flow path, the heat being transferred to the reaction flow paths thereby causing the endothermic reaction to occur,
(iii) via first withdrawal means withdrawing endothermic product gas from the reaction flow path, and
(iv) via second withdrawal means withdrawing combustion gas from the combustion flow path.

9. A process according to claim 8 wherein the reaction tubes contain an endothermic reaction catalyst.

10. A process according to either claim 8 or claim 9 wherein the endothermic reactant is a mixture of a gaseous hydrocarbon and steam whereby the endothermic product is synthesis gas.

11. A process according to claim 10 wherein the gaseous hydrocarbon is methane.

12. A process according to either claim 10 or claim 11 wherein the endothermic reactant is heated to a temperature in the range 800 to 1000°C.

13. A process according to any one of claims 10 to 12 wherein the pressure in the reaction flow paths is at least 0.508 MPa (10 atm).

## Patentansprüche

1. Vorrichtung zur Ausführung einer endothermen Reaktion, wobei ein endothermes Reaktantengas durch die Verbrennung von Luft und einem brennbaren Brenngas erwärmt wird, wodurch das Reaktantengas ein endothermes Produkt bildet, wobei die Vorrichtung umfaßt:
(a) ein Gefäß (102),
(b) eine Vielzahl von Reaktionsröhren (110) aus Metall in dem Gefäß, die das Innere des Gefäßes in eine Vielzahl von gesonderten Reaktionsströmungswegen aufteilen, die gemeinsam einen Reaktionsströmungsweg zur Ausführung der endothermen Umsetzung festlegen, und eine Vielzahl gesonderter Verbrennungsströmungswege außerhalb der Reaktionsröhren, die gemeinsam einen Verbrennungsströmungsweg festlegen, wobei der Reaktionsströmungsweg und der Verbrennungsströmungsweg miteinander in thermischer Verbindung stehen, so daß die Wärme in dem Verbrennungsströmungsweg auf den Reaktionsströmungsweg übertragen werden kann,
(c) eine gesonderte Wärmeerzeugungsvorrichtung (116), verbunden mit jeder der Reaktionsrohren (110) aus Metall, zur Erzeugung von Wärme durch Verbrennung von Brenngas und Luft,
(d) eine erste Zuführungsvorrichtung (126), um das Reaktantengas in den Reaktionsströmungsweg strömen zu lassen und eine erste Entnahmevorrichtung (130) zum Abziehen des endothermen Produktgases aus dem Reaktionsströmungsweg, und
(e) eine zweite Zuführungsvorrichtung (136), vorgesehen zur gesonderten Zufuhr von Luft (140) und Brenngas (150) zu jeder der Wärmeerzeugungsvorrichtungen, wobei die Wärmeerzeugungsvorrichtung im Inneren des Gefäßes angeordnet ist, wodurch die Luft und das Brenngas oberhalb ihrer Selbstentzündungstemperatur erhitzt werden können, bevor sie die Wärmeerzeugungsvorrichtung erreichen, und eine zweite Entnahmevorrichtung zum Abziehen von Brenngas aus dem Verbrennungsströmungsweg.

2. Vorrichtung nach Anspruch 1, wobei die zweite Zuführungsvorrichtung einen Zuführungsdurchgang (150) für Brenngas und einen Zuführungsdurchgang (140) für Luft für jede Röhre festlegt, wobei der vereinigte Zuführungsdurchgang für Luft und Zuführungsdurchgang für Brenngas für jede Röhre konzentrisch ist.

3. Vorrichtung nach Anspruch 1, wobei die Wärmeerzeugungsvorrichtung ausreichend weit von der ersten und zweiten Entnahmevorrichtung beabstandet ist, so daß sowohl das endotherme Produktgas, als auch das Verbrennungsgas, gekühlt werden können, bevor sie das Gefäß verlassen.

4. Vorrichtung nach einem der vorangehenden Ansprüche, wobei die endothermen Reaktionsröhren einen Katalysator für eine endotherme Reaktion enthalten.

5. Vorrichtung nach einem der vorangehenden Ansprüche, wobei die Vorrichtung in Form eines Rohrbündelwärmetauschers mit einer befestigten Röhrenplattenkonstruktion vorliegt.

6. Vorrichtung nach einem der vorangehenden Ansprüche, wobei die Reaktionsröhren zwischen ihren betreffenden Enden nicht getragen werden.

7. Vorrichtung nach einem der vorangehenden Ansprüche, wobei die Reaktionsröhren im wesentlichen gerade und im wesentlichen parallel sind.

8. Verfahren zur Ausführung einer endothermen Umsetzung in eine Vorrichtung für eine endotherme Reaktion, in der ein endothermer Reaktant durch Verbrennung von Luft und einem brennbaren Brenngas erhitzt wird, um den Reaktanten zu einem endothermen Produkt umzusetzen, wobei die Vorrichtung umfaßt:
(a) ein Gefäß (102),
(b) eine Vielzahl von Reaktionsröhren (110) aus Metall in dem Gefäß, die das Innere des Gefäßes in eine Vielzahl von gesonderten Reaktionsströmungswegen aufteilen, die gemeinsam einen Reaktionsströmungsweg zur Ausführung der endothermen Umsetzung festlegen, und eine Vielzahl gesonderter Verbrennungsströmungswege außerhalb der Reaktionsröhren, die gemeinsam einen Verbrennungsströmungsweg festlegen, wobei der Reaktionsströmungsweg und der Verbrennungsströmungsweg miteinander in thermischer Verbindung stehen, so daß die Wärme in dem Verbrennungsströmungsweg auf den Reaktionsströmungsweg übertragen werden kann,
(c) eine gesonderte Wärmeerzeugungsvorrichtung (116), verbunden mit jeder der Reaktionsröhren (110) aus Metall, zur Erzeugung von Wärme durch Verbrennung von Brenngas und Luft,
(d) eine erste Zuführungsvorrichtung (126) um das Reaktantengas in die Reaktionsströmungswege strömen zu lassen und eine erste Entnahmevorrichtung (130) zum Abziehen des endothermen Produktgases aus den Reaktionsströmungswegen, und
(e) eine zweite Zuführungsvorrichtung (136) vorgesehen zur gesonderten Luftzufuhr (140) und Brenngas (150) für jede der Wärmeerzeugungsvorrichtungen, wobei die Wärmeerzeugungsvorrichtung im Inneren des Gefäßes angeordnet ist, wodurch die Luft und das Brenngas oberhalb ihrer Selbstentzündungstemperatur erhitzt werden können, bevor sie die Wärmeerzeugungsvorrichtung erreichen, und eine zweite Entnahmevorrichtung zum Abziehen von Brenngas aus dem Verbrennungsströmungsweg,
wobei das Verfahren umfaßt
(i) über eine erste Zuführungsvorrichtung Strömenlassen des Reaktanten längs der Reaktantenströmungswege,
(ii) über eine zweite Zuführungsvorrichtung gesonderte Zufuhr der Luft und des Brenngases zu jeder der Wärmeerzeugungsvorrichtungen, wobei das Brenngas und die Luft über ihre Selbstentzündungstemperatur erhitzt werden, bevor sie die Wärmeerzeugungsvorrichtung erreichen, so daß die Luft und das Brenngas sich selbst entzünden und unter Wärmeerzeugung in dem Verbrennungsströmungsweg verbrennen, wobei die Wärme auf den Reaktionsströmungsweg übertragen wird, wodurch die endotherme Umsetzung stattfindet,
(iii) über eine erste Entnahmevorrichtung Abziehen des endothermen Produktgases aus dem Reaktionsströmungsweg, und
(iv) über eine zweite Entnahmevorrichtung Abziehen von Verbrennungsgas aus dem Verbrennungsströmungsweg.

9. Verfahren nach Anspruch 8, wobei die Reaktionsröhren einen endothermen Reaktionskatalysator enthalten.

10. Verfahren nach Anspruch 8 oder Anspruch 9, wobei der endotherme Reaktant ein Gemisch aus einem gasförmigen Kohlenwasserstoff und Dampf ist, wodurch das endotherme Produkt Synthesegas ist.

11. Verfahren nach Anspruch 10, wobei der gasförmige Kohlenwasserstoff Methan ist.

12. Verfahren nach entweder Anspruch 10 oder Anspruch 11, wobei der endotherme Reaktant auf eine Temperatur im Bereich von 800 bis 1000°C erhitzt wird.

13. Verfahren nach einem der Ansprüche 10 bis 12, wobei der Druck in den Reaktionsströmungswegen mindestens 0,508 MPa (10 atm) beträgt.

## Revendications

1. Appareil pour la conduite d'une réaction endothermique, dans lequel un gaz de réaction endothermique est chauffé par combustion d'air et d'un combustible gazeux pour amener ainsi le gaz réactionnel à former un produit endothermique, appareil qui comprend :
(a) un récipient (102)
(b) une pluralité de tubes réactionnels métalliques (110) dans le récipient, divisant l'intérieur du récipient en une pluralité de trajets d'écoulement de réaction distincts définissant collectivement un trajet d'écoulement de réaction pour la conduite de la réaction endothermique et une pluralité de trajets d'écoulement de combustion distincts à l'extérieur des tubes réactionnels définissant collectivement un trajet d'écoulement de combustion, le trajet d'écoulement de réaction et le trajet d'écoulement de combustion étant en communication thermique l'un avec l'autre de telle sorte que la chaleur dans le trajet d'écoulement puisse être transférée au trajet d'écoulement de réaction,
(c) des moyens distincts de production de chaleur (116) associés à chacun des tubes réactionnels métalliques (110) pour engendrer de la chaleur par combustion du combustible gazeux et de l'air,
(d) des premiers moyens d'alimentation (126) pour provoquer l'écoulement du gaz réactionnel dans le trajet d'écoulement de réaction et des premiers moyens de déchargement (130) pour décharger le produit gazeux endothermique du trajet d'écoulement de réaction, et
(d) des seconds moyens d'alimentation (136) aptes à fournir séparément de l'air (140) et du combustible gazeux (150) à chacun des moyens de production de chaleur, les moyens de production de chaleur étant situés à l'intérieur du récipient, l'air et le combustible gazeux pouvant ainsi être chauffés à une température supérieure à leur température d'auto-inflammation avant d'atteindre les moyens de production de chaleur et les seconds moyens de déchargement pour décharger le gaz de combustion du trajet d'écoulement de combustion.

2. Appareil suivant la revendication 1, dans lequel les seconds moyens d'alimentation définissent une voie de passage d'introduction de combustible gazeux (150) et une voie de passage d'introduction d'air (140) pour chaque tube, la voie de passage d'introduction d'air et la voie de passage d'introduction de combustible associées pour chaque tube étant concentriques.

3. Appareil suivant la revendication 1, dans lequel les moyens de production de chaleur sont espacés suffisamment des premier et second moyens de déchargement pour que le produit gazeux endothermique et le gaz de combustion puissent être refroidis avant de quitter le récipient.

4. Appareil suivant l'une quelconque des revendications précédentes, dans lequel les tubes réactionnels endothermiques contiennent un catalyseur de réaction endothermique.

5. Appareil suivant l'une quelconque des revendications précédentes, qui est sous forme d'un échangeur de chaleur à calandre ayant une configuration comportant des plaques tubulaires fixes.

6. Appareil suivant l'une quelconque des revendications précédentes, dans lequel les tubes réactionnels sont dépourvus de support entre leurs extrémités respectives.

7. Appareil suivant l'une quelconque des revendications précédentes, dans lequel les tubes réactionnels sont essentiellement droits et essentiellement parallèles.

8. Procédé pour la conduite d'une réaction endothermique dans un appareil de réaction endothermique dans lequel un corps réactionnel endothermique est chauffé par combustion d'air et d'un combustible gazeux pour transformer ainsi le corps réactionnel en un produit endothermique, appareil qui comprend :
(a) un récipient (102),
(b) une pluralité de tubes réactionnels métalliques (110) dans le récipient, divisant l'intérieur du récipient en une pluralité de trajets d'écoulement de réaction distincts définissant collectivement un trajet d'écoulement de réaction pour la conduite de la réaction endothermique et une pluralité de trajets d'écoulement de combustion distincts à l'extérieur des tubes réactionnels définissant collectivement un trajet d'écoulement de combustion, le trajet d'écoulement de réaction et le trajet d'écoulement de combustion étant en communication thermique l'un avec l'autre de telle sorte que de la chaleur dans le trajet d'écoulement de combustion puisse être transférée au trajet d'écoulement de réaction,
(c) des moyens distincts de production de chaleur (116) associés à chacun des tubes réactionnels métalliques (110) pour engendrer de la chaleur par combustion du combustible gazeux et de l'air,
(d) des premiers moyens d'alimentation (126) pour provoquer l'écoulement du gaz réactionnel dans les trajets d'écoulement de réaction et des premiers moyens de déchargement (130) pour décharger le produit endothermique des trajets d'écoulement de réaction, et
(e) des seconds moyens d'alimentation (136) aptes à fournir séparément de l'air (140) et du combustible gazeux (150) à chacun des moyens de production du chaleur, les moyens de production de chaleur étant situés à l'intérieur du récipient, l'air et le combustible gazeux pouvant ainsi être chauffés à une température supérieure à leur température d'auto-inflammation avant d'atteindre les moyens de production de chaleur et les seconds moyens de déchargement pour décharger le gaz de combustion du trajet d'écoulement de combustion,
procédé qui comprend les étapes consistant
(i) par les premiers moyens d'alimentation, à provoquer l'écoulement du flux du corps réactionnel le long des trajets d'écoulement de corps réactionnel,
(ii) par les seconds moyens d'alimentation, à introduire séparément l'air et le combustible gazeux dans chacun des moyens de production de chaleur, le combustible gazeux et l'air étant chauffés à une température supérieure à leur température d'auto-inflammation avant d'atteindre les moyens de production de chaleur de telle sorte que l'air et le combustible gazeux subissent une auto-inflammation et une combustion en produisant de la chaleur dans le trajet d'écoulement de combustion, la chaleur étant transférée aux trajets d'écoulement de réaction en provoquant ainsi la réaction endothermique,
(iii) par les premiers moyens de déchargement, à décharger le produit gazeux endothermique du trajet d'écoulement de réaction et,
(iv) par les seconds moyens de déchargement, à décharger le gaz de combustion du trajet d'écoulement de combustion.

9. Procédé suivant la revendication 8, dans lequel les tubes réactionnels contiennent un catalyseur de réaction endothermique.

10. Procédé suivant la revendication 8 ou la revendication 9, dans lequel le corps réactionnel endothermique consiste en un mélange d'un hydrocarbure gazeux et de vapeur d'eau, le produit endothermique consistant ainsi en gaz de synthèse.

11. Procédé suivant la revendication 10, dans lequel l'hydrocarbure gazeux consiste en méthane.

12. Procédé suivant la revendication 10 ou la revendication 11, dans lequel le corps réactionnel endothermique est chauffé à une température comprise dans l'intervalle de 800 à 1000°C.

13. Procédé suivant l'une quelconque des revendications 10 à 12, dans lequel la pression dans les trajets d'écoulement de réaction est au moins égale à 0,508 MPa (10 atmosphères).
